# FASCICULE DE BREVET EUROPEEN

(11) **EP 2 196 629 B1**
(45) Date de publication et mention de la délivrance du brevet: **16.05.2018**
(21) Numéro de dépôt: 08171385.1
(22) Date de dépôt: 11.12.2008
(51) Int. Cl.: F01D 9/04

(54) **Virole interne composite segmentée de redresseur de compresseur axial**
Segmentierter Verbundmantelring eines axialen Verdichters
Segmented composite shroud ring of an axial compressor

(43) Date de publication de la demande: 16.06.2010
(73) Titulaire: Safran Aero Boosters SA, 4041 Herstal (BE)
(72) Inventeur: Cortequisse, Jean-François, 3870, Heers (BE)
(74) Mandataire: Lecomte & Partners

(56) Documents cités:
- EP-A1- 1 426 559
- EP-A2- 0 277 884
- CH-A- 398 645
- GB-A- 802 508
- GB-A- 2 037 901
- GB-A- 2 115 883
- GB-A- 2 314 385

## Description

### Domaine technique

L'invention a trait à une virole interne de stator à aubes ainsi qu'à un stator annulaire de turbomachine axiale, plus particulièrement à une virole interne de redresseur à aube ainsi qu'à un redresseur de compresseur axial. De tels compresseurs sont typiquement présents dans des turboréacteurs, turbopropulseurs et générateurs de gaz.

### Etat de la technique antérieure

Un compresseur axial comporte typiquement une série d'étages de compression, chacun étant constitué d'un agencement circonférentiel d'aubes montées à leurs bases sur un rotor. Un stator servant de carter enveloppe le rotor et les aubes. Les extrémités des aubes du rotor se déplacent à proximité de la face interne du stator. Le fluide, typiquement de l'air, est ainsi déplacé et comprimé selon une veine annulaire concentrique à l'axe de rotation du rotor. Le rotor comporte ainsi plusieurs rangées d'aubes circonférentielles distantes les unes des autres. Des rangées d'aubes fixes sont montées sur le stator entre les rangées d'aubes du rotor dans le but de redresser le flux d'air entre deux étages du compresseur. Ces aubes de redresseur comportent typiquement une virole interne à leurs extrémités dans le but de former une délimitation du flux primaire au niveau inférieur. Cette virole est typiquement de forme annulaire avec une surface extérieure spécialement profilée pour la délimitation du flux. La surface extérieure comporte une série d'ouvertures destinées à recevoir les extrémités des aubes fixées à leurs bases au stator. Cette virole assure également une solidarisation des aubes entre elles au niveau de leurs extrémités sinon libres. La face interne de la virole est garnie d'un matériau friable ou encore dit plus couramment « abradable » selon l'expression anglaise. Cette couche d'abradable est apte à coopérer par frottement avec une ou plusieurs nervures circonférentielles sur le rotor en vue d'assurer une certaine étanchéité. Ces nervures sont plus couramment appelées léchettes.

En fonction des dimensions et des matériaux utilisés et également pour des raisons de facilité de montage, il peut être intéressant de segmenter la virole. En effet, dans le cas de la réalisation d'une virole en matériau composite, par exemple, il peut s'avérer difficile d'injecter la résine du matériau composite sur de longues pièces si bien que la segmentation de la virole en vue de réduire la longueur des segments est intéressante. La segmentation de la virole peut s'avérer également intéressante en vue de compenser les dilatations différentielles au niveau des aubes elles-mêmes et de parties du stator supportant les aubes.

Le document US 4,395,195 divulgue une virole interne de compresseur de moteur à turbine où la virole est segmentée en plusieurs sections. L'orientation des aubes est variable depuis le stator si bien que la liaison entre les aubes et la virole est du type rotatif. La jonction entre les différents segments extérieurs se fait entre deux aubes voisines et au moyen des segments intérieurs en forme de « C » dont l'ouverture est dirigée vers l'extérieur et recevant par coulissement les segments extérieurs de la virole. Une telle construction est assez complexe et coûteuse. De plus, l'assemblage de la virole peut s'avérer assez long et donc coûteux.

Le document GB 727,608 divulgue une virole interne de stator de turbine à gaz constituée de deux segments. Ces deux segments sont reliés entre eux en faisant coulisser l'extrémité de l'un dans l'extrémité de l'autre. Ces moyens de liaison par coulissement empêchent tout mouvement relatif selon l'axe principal de la machine. La jonction entre les différents segments extérieurs se fait entre deux aubes voisines via les moyens de liaison coulissants.

Le document GB 2 037 901 a trait à une construction particulière d'un distributeur de turbine situé entre la chambre de combustion et le premier étage rotatif de la turbine. Cette construction particulière fait intervenir une double paroi, à savoir une paroi support et une paroi plus fine servant d'habillage délimitant la veine fluide traversant le distributeur. Les aubes sont en liaison avec la paroi support, le maintien des aubes n'étant pas assuré par la paroi mince qui a pour rôle de délimiter une zone de refroidissement. Elle est maintenue par le carter de la turbine.

Le document CH 398 645 divulgue un étage distributeur pour une turbine de turbomachine axiale. Il comprend un anneau interne et un anneau externe. Des aubes distributeur sont disposées entre l'anneau interne et l'anneau interne et sont fixées à ces deux anneaux. Des segments de tôle 2 présentant les découpes épousant les aubes sont disposées entre les aubes sur les anneaux interne et externe et y sont soudées.

Le document US 5,482,433 divulgue un stator annulaire conforme au préambule de la revendication 14.

La segmentation de la virole a cependant pour inconvénient par rapport à une virole monobloc que les caractéristiques aérodynamiques peuvent être dégradées, en particulier au niveau de la jonction. En effet, en fonction des matériaux utilisés, de la précision de réalisation et de montage, la jonction entre deux segments peut présenter un certain ressaut ou désalignement des surfaces jointives délimitant le flux primaire.

L'objet de la demande a donc pour but de proposer une virole interne palliant au moins partiellement les problèmes sus mentionnés.

### Exposé de l'invention

Selon un premier aspect de l'invention, il est proposé un redresseur de stator à aubes de turbomachine axiale, comprenant des aubes et une virole interne maintenue en place par les aubes et conçue pour épouser un rotor de la turbomachine, la virole étant constituée d'au moins deux segments ayant une forme générale d'arc de cercle et destinés à être disposés bout à bout en vue de former la virole, chaque segment comprenant sur sa face extérieure une pluralité d'ouvertures réparties selon l'arc de cercle général du segment, recevant, chacune, l'extrémité d'une aube du stator, chaque extrémité de segment comportant une section dont le profil correspond essentiellement à celui de l'extrémité de l'aube correspondante lorsque le segment est mis en place sur les aubes du stator, de sorte à ce que la jonction entre deux segments adjacents corresponde au profil de l'aube correspondante ; la liaison au niveau de la jonction entre les aubes et les segments étant assurée par un élastomère.

Préférentiellement les extrémités des segments sont profilées de sorte à contourner les aubes au droit des jonctions entre les segments lorsqu'ils sont mis en place sur les aubes du stator.

Préférentiellement les segments comportent un bord amont et un bord aval par rapport à l'écoulement de fluide dans la turbomachine, la partie de la jonction contournant l'aube étant à distance du bord amont et du bord aval.

Préférentiellement la partie de la jonction en aval de l'aube et/ou la partie de la jonction en amont de l'aube comporte(nt) une section généralement rectiligne adjacente au contour de l'aube et formant un angle avec l'axe de la machine supérieur ou égal à 30°, préférentiellement supérieur ou égal à 60°.

Préférentiellement la partie de la jonction en aval de l'aube et/ou la partie de la jonction en amont de l'aube comporte(nt) des moyens de liaison à contact positif, préférentiellement sur chaque segment de part et d'autre de la jonction, les moyens de liaison assurant une liaison généralement selon une direction tangente au cercle de la virole.

Préférentiellement les moyens de liaison à contact positif font partie des segments de part et d'autre de la jonction et sont tels qu'ils coopèrent par emboitement, le mouvement d'emboitement étant préférentiellement généralement dirigé selon un rayon des segments.

Préférentiellement les moyens de liaison sont venus de matière avec les segments.

Préférentiellement les moyens de liaison sont prévus au niveau d'une partie de la jonction qui est généralement parallèle aux bords amont et aval des segments.

Préférentiellement les moyens de liaison comprennent au moins un bossage sur un segment et un creux sur le segment voisin, le bossage et le creux ayant des formes géométriques correspondantes et sorte à ce que le bossage puisse coopérer avec le creux lors de l'emboitement afin d'assurer la liaison, préférentiellement le creux débouche sur une des surfaces extérieure et intérieure du segment.

Préférentiellement la jonction est telle que son profil comporte une partie centrale correspondant à l'aube, deux parties intermédiaires droites, de part et d'autre de la partie centrale, généralement parallèles aux bords des segments et comportant les moyens de liaison, et deux parties de retour prolongeant les parties intermédiaires vers le bord correspondant.

Préférentiellement les segments sont en matériau composite, préférentiellement en matériau comprenant une résine associée à des fibres de carbone et/ou de verre.

Préférentiellement la section d'un segment est en forme générale de U dont la partie ouverte est dirigée vers l'intérieur du cercle décrit par les segments.

Préférentiellement la section des segments comprend une base de délimitation du flux entre les aubes du stator, la base comportant les ouvertures destinées à recevoir les extrémités des aubes, chaque ouverture étant prolongée vers l'intérieur par de la matière en saillie de la base, la matière en saillie étant préférentiellement venue de matière avec le segment.

Selon un second aspect de l'invention, il est proposé un stator annulaire à aubes de turbomachine axiale, constitué d'au moins deux secteurs destinés à être disposés bout à bout en vue de former le stator, chaque secteur d'un seul tenant comprenant un segment externe et un segment interne, chaque segment ayant une forme générale d'arc de cercle correspondant à l'anneau externe et interne, respectivement, du stator ; une pluralité d'aubes agencées entre le segment externe et le segment interne et réparties le long des segments externe et interne, où les secteurs sont en matériau composite, une des extrémités (11b') du segment interne (8') est au droit de la face externe de la dernière aube du secteur de ce côté, et l'autre extrémité (11a') du segment interne (8') comporte une section dont le profil correspond essentiellement au profil extérieur de l'aube proximale du secteur voisin adjacent, de sorte à ce que la jonction entre deux secteur adjacents corresponde à la face extérieure de l'aube correspondante.

### Description sommaire des figures

La figure 1 est une vue partielle en coupe d'un compresseur axial où figure, entre autres, une virole interne selon l'invention.
La figure 2 est une vue en perspective d'une partie de virole segmentée selon l'invention.
La figure 3 est une vue schématique en élévation de la jonction entre deux segments de virole de la figure 2.
La figure 4 est une vue en perspective de la face inférieure de deux parties de segments de virole avec leur jonction selon l'invention.
La figure 5 est une vue en coupe d'une ouverture de segment de virole, la coupe étant transversale à l'axe général de l'ouverture.
La figure 6 est une vue en perspective d'une partie de virole segmentée selon un mode de réalisation alternative de l'invention.
La figure 7 est une vue en perspective d'une partie de virole segmentée selon un autre mode de réalisation alternative de l'invention.
La figure 8 est une vue en perspective d'un secteur de redresseur de compresseur d'un seul tenant en matériau composite selon l'invention.

### Meilleures manières de réaliser l'invention

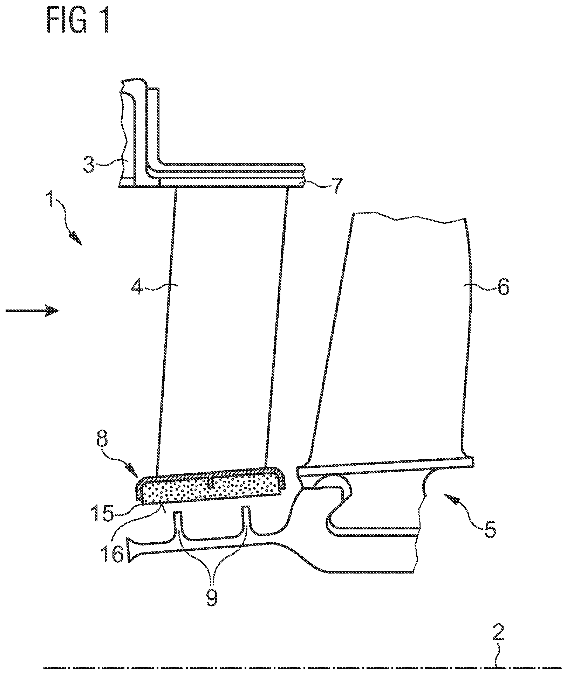

La figure 1 illustre une vue en coupe d'une partie d'un compresseur axial, typiquement de moteur à réaction ou moteur à turbine. Le compresseur comporte un rotor 5 tournant autour de l'axe 2. Le rotor comporte une série d'aubes 6 fixées sur sa circonférence, correspondant à un étage du compresseur. La direction et le sens d'écoulement du fluide à comprimer est illustré par la flèche. Le carter 3 ou encore stator du compresseur comporte une série d'aubes 4 fixées à leurs bases. Cette série d'aubes constitue un redresseur de la veine fluide située entre deux rangées d'aubes de la roue mobile, la rangée amont n'étant pas représentée. Une rangée d'aube de la roue mobile et la grille redresseur en aval constituent un étage du compresseur. Les extrémités intérieures des aubes 4 sont liées à une virole 8. La virole a une forme générale d'anneau circulaire épousant le rotor 5. La virole 8 délimite ainsi la partie inférieure ou interne de la veine fluide annulaire traversant le redresseur. Elle est maintenue en place par les aubes et assure une étanchéité avec le rotor 5. La virole comporte sur sa face intérieure une couche d'abradable 15. Le rotor 5 comporte deux nervures circonférentielles ou plus couramment désignées léchettes 9 coopérant avec la couche de matériau friable 15. L'abradable 15 est appliqué et ensuite usiné de sorte à présenter une surface d'étanchéité 16 coopérant avec les léchettes. Ce matériau a des propriétés de friction avec le métal des léchettes et a la capacité de se désagréger en fine poussière en cas de contact avec les léchettes lorsque le rotor est en rotation. Les léchettes 9 et la surface 16 en matériau friable constituent ainsi un labyrinthe d'étanchéité.

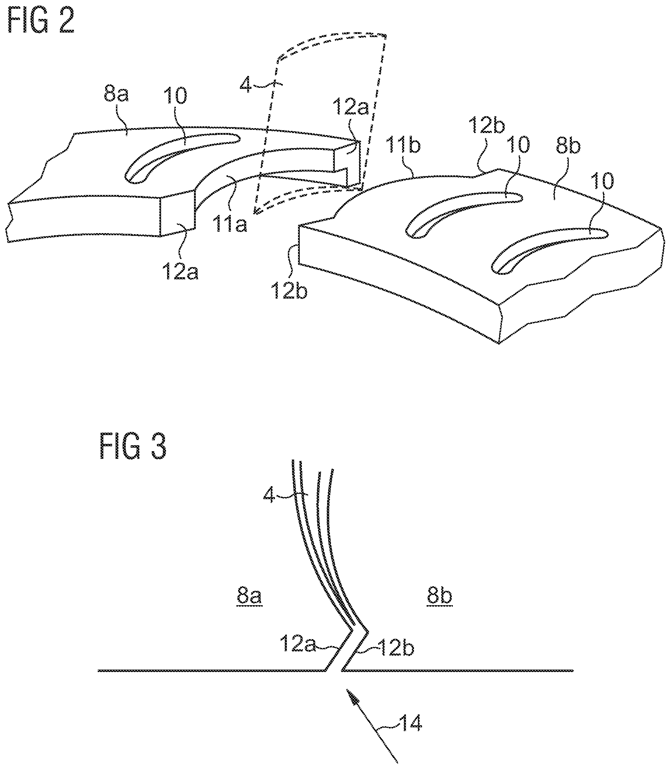

La construction et l'assemblage de la virole selon l'invention sont illustrés à la figure 2. La virole est constituée de plusieurs segments dont deux 8a et 8b sont représentés à la figure 2. Ces segments sont en principe tous similaires et au nombre de deux ou plus. Le nombre de segments peut être choisi librement sur base de différents critères tels que le diamètre de la virole à construire, le matériau utilisé et le nombre d'aubes du redresseur. La section des segments est généralement en forme de « U » renversé. Elle comporte une base généralement plate bien que profilée d'un point de vue aérodynamique, cette partie plate formant un ruban circulaire lorsque la virole est formée par assemblage de tous ses segments. Elle comporte un bord amont et un bord aval par rapport à la direction d'écoulement du fluide. Sa largeur, du bord amont au bord aval, est essentiellement constante. La section des segments comporte également deux parties courtes dirigées vers le bas ou encore vers l'intérieur du ruban circulaire formé par la base, chacune étant au niveau d'un des bords amont et aval. Elles sont au moins approximativement perpendiculaires à la partie dite plate et de hauteur généralement constante. Elles constituent avec la face intérieure de la partie dite plate un espace ou volume apte à recevoir l'application sous forme liquide ou pâteuse d'un matériau du type colle ou élastomère et/ou un matériau friable.

Chaque segment 8a, 8b comporte des ouvertures 10 pratiquées dans la surface de la partie dite plate. Ces ouvertures sont réparties le long de l'arc de cercle décrit par les segments. L'espacement entre ces ouvertures est dicté par la position des aubes, ces dernières étant rigidement fixées ou encore encastrées au stator. Typiquement, chaque aube comporte à son extrémité haute une base formant une plate-forme, cette plate-forme étant alors positionnée dans une ouverture correspondante du stator pour y être liée par soudure. Typiquement, les aubes sont toutes identiques et sont espacées de manière constante le long de la périphérie du stator et de la virole. D'autres agencements sont cependant possibles et n'altèrent en rien le principe de l'invention. Le profil des ouvertures correspond au profil des aubes au niveau de la virole, c'est-à-dire au niveau inférieur des aubes. Une certaine tolérance est cependant prévue permettant une mise en place aisée des segments sur les aubes. Les segments de virole sont dimensionnés de sorte à ce que les extrémités inférieures des aubes puissent pénétrer les ouvertures 10 lors de la mise en place des segments en vue de former la virole. En fonction du design choisi, les extrémités des aubes peuvent soit affleurer la face interne de la partie dite plate des segments ou encore dépasser légèrement de sorte à être en saillie par rapport à cette face interne, cette saillie ne dépassant pas les extrémités des bords amont et aval. Les ouvertures 10 sont plus ou moins centrées sur les segments par rapport à l'axe de la machine, c'est-à-dire que les distances mesurées selon l'axe de la machine entre chaque extrémité de l'ouverture 10 et le bord correspondant sont essentiellement égales. Un décalage des ouvertures selon l'axe de la machine par rapport à cette position centrée est envisageable pour autant que les ouvertures n'empiètent pas sur les branches des bords amont et aval.

L'extrémité du segment 8a est profilée de sorte à épouser l'aube 4 située au niveau de la jonction entre les segments 8a et 8b. Il en va de même pour l'extrémité du segment 8b. En effet, les segments 8a et 8b comportent, chacun, une partie 11a ou 11b dont le profil correspond à celui de l'aube 4. Les extrémités des segments 8a et 8b comportent également, outre la partie correspondant à l'aube, des parties 12a/12b de part et d'autres de la partie 11a/11b et dont les profils se correspondent en vue de fermer la jonction en amont et aval de l'aube. Ces parties 12a et 12b de la jonction en amont et aval de l'aube sont rectilignes. La jonction en amont de l'aube (à gauche à la figure 2) est inclinée par rapport au bord de la virole ainsi formée, et ce avec un angle d'environ 45°.

Cette géométrie est mieux illustrée à la figure 3 qui est une vue en élévation de la jonction entre deux segments de la virole. Une partie de l'aube 4 seulement y est représentée, en fait la partie amont avec le bord d'attaque du fluide. Le bord amont des deux segments 8a et 8b y sont représentés ainsi que la jonction à la périphérie directe de l'aube et en amont de l'aube. L'inclinaison de la partie de jonction droite 12a, 12b en amont de l'aube y est représentée. La direction d'écoulement du fluide provenant de l'étage du compresseur précédant le redresseur en question est représentée par la flèche 14. Comme on peut le constater, la direction de la partie de jonction droite en amont de l'aube forme un angle proche de la perpendicularité par rapport à la direction d'écoulement de fluide. Un pareil arrangement a pour but de limiter l'érosion des angles potentiellement vifs de la jonction par l'écoulement de fluide. Il est donc souhaitable que cet angle soit le plus proche de 90°, sinon au moins supérieur à 45°.

L'agencement des segments par rapport à leur jonction au niveau d'une aube peut être résumé en ce que les segments sont dimensionnés de sorte à ce que la jonction entre deux segments soit située au niveau d'une aube en épousant le profil de l'aube. Avantageusement, la partie de jonction en amont de l'aube est orientée de sorte à former un angle d'au moins 45° par rapport à l'axe de la machine. Cette mesure peut également s'appliquer à la partie de jonction en aval de l'aube.

Un certain jeu est prévu entre les parties 11a, 11b des extrémités de segments et le profil de l'aube en vue de pouvoir appliquer une colle ou un élastomère entre la jonction et l'aube afin de lier mécaniquement l'aube aux deux segments adjacents et d'étanchéifier cette liaison. Le jeu nécessaire à l'application d'un tel matériau dépend du matériau et de la méthode d'application. Ce jeu est typiquement de l'ordre du millimètre.

Une fois un ou tous les segments de la virole mis en place par rapport aux aubes, ces dernières sont fixées par rapport au segment par application d'une colle ou d'un élastomère entre le profil de l'aube et l'ouverture du segment correspondant. Ce matériau peut être appliqué à partir de la face extérieure du segment au niveau du jeu entre l'aube et l'ouverture et/ou à partir de la face intérieure du segment au niveau du jeu entre l'aube et l'ouverture et au niveau de la partie d'aube en saillie si tel est le cas.

La présence de la jonction entre les segments au niveau de l'aube tel que cela est décrit ci avant est avantageuse du point de vue aérodynamique. En effet, la surface extérieure de la virole ainsi construite a pour but général de délimiter le flux de fluide propulsé par le ou les étages précédents du compresseur. L'agencement tel que décrit offre l'avantage que chaque veine fluide passant entre deux aubes voisines est délimitée au niveau inférieur par une section de virole exempte de jonction. La jonction au niveau de l'aube est moins susceptible de perturber de manière sensible l'écoulement fluide car une grande partie de la jonction contourne étroitement l'aube de manière similaire aux ouvertures dans lesquelles les aubes voisines sont insérées. La partie de la jonction en amont de l'aube qui est, elle, susceptible de perturber l'écoulement en cas de ressaut ou désalignement est fortement réduite en taille par rapport à une jonction sur toute la largeur de la virole. La perturbation éventuelle causée par cette partie de la jonction reste ainsi très limitée.

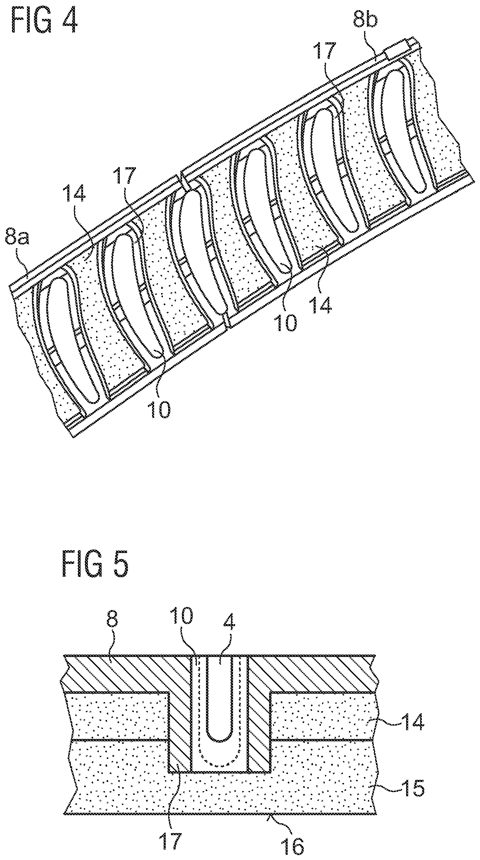

Les ouvertures 10 pratiquées dans les segments et destinées à recevoir les extrémités inférieures des aubes peuvent être renforcées par une extension de matière en saillie par rapport à la face intérieure de la virole. Deux sections de segment comportant de tels renforts sont illustrées à la figure 4. Cette figure est une vue en perspective de la face intérieure de deux segments 8a et 8b selon l'invention. On peut y voir les ouvertures 10 pratiquées dans le segment 8. Ces ouvertures sont renforcées ou prolongées par une extension 17 de l'ouverture 10 à partir de la face inférieure du segment. Cette extension 17 fait office de fourreau dont la section ouverte correspond à celle de l'ouverture et de l'aube. La jonction entre les deux segments comporte de manière similaire une extension correspondant au profil d'une face de l'aube à chaque extrémité de segment. La figure 5 est une vue en coupe transversale d'une ouverture 10 du segment 8 de la figure 4. Cette vue en coupe illustre bien l'extension 17 de l'ouverture 10 en saillie de la face intérieure du segment 8. Une partie de l'aube 4 destinée à être insérée dans cette ouverture 10 est également représentée. La matière appliquée entre l'ouverture et l'aube servant de liaison entre ces deux est représentée par les pointillés. Cette extension 17 est cependant plus courte que les extensions des bords amont et aval (non visibles sur la figure 5) afin de ménager de la place pour la matière abradable 15 destinée à former une surface de contact 16 coopérant avec les léchettes du rotor (non représentés sur cette figure). Une première couche 14 d'une autre matière, telle que des blocs de mousse de polymères à faible densité (par exemple de la mousse polyméthacrylimide, polyuréthane ou polyetherimide). La densité d'une telle matière est plus faible que celle du matériau constituant le revêtement abradable 15 déposé ultérieurement.

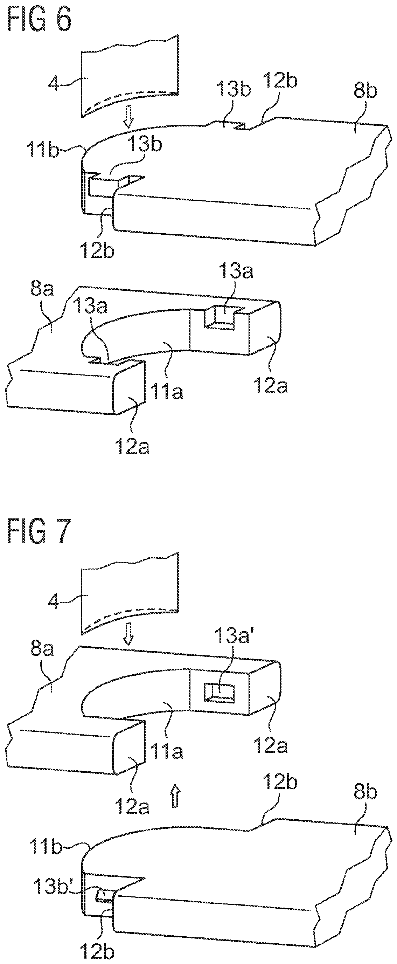

Une première alternative au design de jonction entre deux segments tel que montré à la figure 2 est illustrée à la figure 6. Elle montre une vue en perspective de deux segments 8a et 8b dont les extrémités formant la jonction entre eux lorsqu'ils sont assemblés comportent des moyens de liaison à contact positif. Chaque extrémité comporte, tout comme dans le design de la figure 2, une partie 11a ou 11b dont le profil correspond à celui de l'aube 4. L'extrémité droite du segment 8a a un profil général en forme de « U » dont l'ouverture est dirigée vers l'autre segment 8b à joindre. La base du « U » est formée par la partie 11a correspondant au profil côté extrados de l'aube 4. Les deux branches du « U » sont rectilignes et comportent chacune un creux 13a en forme de parallélépipède rectangle débouchant sur la face supérieure ou extérieure de la branche. Les deux branches se terminent, chacune, par une surface plane de contact 12a. L'extrémité gauche du segment 8b a un profil correspondant à l'extrémité correspondante du segment 8a, à savoir un profil général en forme de « U » dont la base est dirigée vers le segment à joindre. Elle comporte une partie 11b correspondant au profil côté intrados de l'aube 4 et deux retours droits, de part et d'autre de la partie 11b, ces retours droits comportant, chacun, un bossage 13b en forme de parallélépipède rectangle. L'extrémité gauche du segment 8b comporte également deux sections planes et perpendiculaires aux bords amont et aval, chacune formant une intersection sur un côté amont ou aval avec le bord et le retour droit correspondants. Les bossages et les creux sont de formes correspondantes et comportent, chacun, deux surfaces perpendiculaires aptes à être en contact positif avec les surfaces correspondantes de sorte à empêcher un éloignement des deux segments selon une direction tangente à l'arc du cercle de la virole et selon une direction perpendiculaire à ce cercle, dans un sens correspondant à un mouvement relatif où le segment 8b se déplace vers le bas par rapport au segment 8a. Les bossages et les creux assurent une liaison mécanique à contact positif entre les deux segments. Leur liaison s'opère par un mouvement relatif entre les deux segments, perpendiculaire à l'arc de cercle. En effet, le segment 8a est mis en place par un mouvement vertical vers le haut selon la figure, c'est-à-dire un mouvement relatif par rapport au segment 8b dirigé vers l'extérieur du cercle formé par les segments. Les creux 13a du segment 8b débouchent vers la surface extérieure du segment et ont une section constante selon l'axe d'engagement des bossages avec les creux. Les bossages 13b peuvent ainsi engager les creux correspondants jusqu'à arriver en butée contre le fond des creux. Ce type de liaison assure un positionnement exact des segments entre eux et une liaison résistante tout en permettant un certain déplacement relatif entre les segments. De tels déplacements relatifs peuvent avoir lieu en raison de différence de dilatation entre la virole externe, les aubes et la virole interne. Ceci est particulièrement vrai lorsque la virole interne est en matériau composite présentant un coefficient de dilatation différent de celui du matériau des aubes et de la virole externe, habituellement en matériau métallique. Les mouvements relatifs possibles entre les segments seront fonction du jeu entre les bossages et les creux. La liaison entre l'aube 4 et les parties 11a et 11b des segments se fait habituellement par application de colle ou élastomère assurant un lien étanche et flexible. Il en va de même pour la liaison des autres aubes vis-à-vis de chaque segment.

Une seconde alternative au design de jonction entre deux segments tel que montré à la figure 2 est illustrée à la figure 7. Elle est similaire à celle de la figure 6 aux différences près que l'engagement des deux segments 8a et 8b se fait en force et que la liaison assurée agit également selon une direction correspondant au rayon du cercle formé par la virole, et ce dans les deux sens. Tout comme au design de la figure 6, l'extrémité droite du segment 8a a un profil général en forme de « U » dont l'ouverture est dirigée vers l'autre segment 8b à joindre, la base du « U » est formée par la partie 11a correspondant au profil côté extrados de l'aube 4, les deux branches du « U » sont rectilignes et comportent chacune un creux 13a'. Les faces internes des branches sont cependant ici inclinées par rapport au plan médian de la surface extérieure de la virole de sorte à former un passage conique pour la partie correspondante de l'autre segment 8b lors du mouvement d'engagement. L'angle formé par ces faces avec le plan médian peut prendre différentes valeurs entre 10° et 45°, préférentiellement entre 15° et 30°, par exemple de l'ordre de 20°. Chaque creux 13a' correspond à un évidement de forme parallélépipédique à partir des faces internes des branches du « U ». De façon similaire au design de la figure 6, l'extrémité gauche du segment 8b a un profil correspondant à l'extrémité correspondante du segment 8a, à savoir un profil général en forme de « U » dont la base est dirigée vers le segment à joindre. Elle comporte une partie 11b correspondant au profil côté intrados de l'aube 4 et deux retours droits, de part et d'autre de la partie 11b, ces retours droits comportant, chacun, un bossage 13b'. Les retours droits sont inclinés par rapport au plan médian de la surface extérieure de la virole similairement aux faces internes du « U » de l'extrémité correspondante du segment 8a. Typiquement l'angle d'inclinaison est identique des deux côtés mais des inclinaisons différentes pourraient également être envisagées. Les bossages 13b' ont une section selon une tangente au cercle formé par la virole qui est triangulaire. Cette section triangulaire correspond essentiellement à un triangle rectangle de sorte à former un bord de verrouillage ou d'accrochage avec le bord correspondant du creux 13a'. De manière plus générale, les bossages 13b' comportent une surface externe (c'est-à-dire en face de la surface interne correspondante de la branche du « U » du segment 8a) inclinée par rapport à la surface externe du retour droit de sorte à s'en éloigner depuis l'extérieur vers l'intérieur du cercle formé par la virole. Les bossages 13b' comportent également un bord de verrouillage essentiellement parallèle à la tangente au cercle, ce bord étant situé en bas de cette surface inclinée en vue de coopérer en butée avec une surface correspondante du creux 13a'. Les bossages 13b' comportent également, chacun, au moins une surface essentiellement perpendiculaire à la tangente du cercle coopérant en butée avec une surface correspondante du creux en vue d'empêcher un éloignement des segments selon une direction correspondant à la tangente au cercle. L'engagement des deux segments 8a et 8b se fait par un mouvement du segment 8b vers le segment 8a de l'intérieur vers l'extérieur du cercle de la virole et selon une direction correspondant essentiellement au rayon du cercle. Les surfaces inclinées des bossages 13b' entrent en contact avec les faces internes des deux branches du « U » du segment 8a. Le segment 8b doit alors être soumis à un effort permettant une déformation des branches et/ou des bossages jusqu'à ce que ces derniers puissent se loger dans les creux 13a' correspondant. A ce moment, les bords de verrouillage des surfaces inclinées des bossages 13b' coopèrent avec les surfaces correspondantes des creux 13a' et empêchent un désengagement du segment 8b vers l'intérieur de la virole (en fait vers le bas sur la figure 7) par rapport au segment 8a. Un mouvement du segment 8b vers l'extérieur de la virole (en fait, vers le haut sur la figure 7) est empêché par le contact des surfaces inclinées des retours droits du « U » du segment 8b avec les surfaces inclinées correspondantes des branches du « U » du segment 8a.

Ces deux alternatives au design de la figure 2 sont données à titre d'exemple et d'autres alternatives à ces exemples sont bien sûr envisageables.

La virole formée par assemblage des différents segments la composant présentera ainsi des avantages de déformabilité en vue de compenser des dilatations différentielles, en particulier lorsque la virole est en matériau autre que la virole externe, par exemple en matériau composite. Elle présentera aussi des avantages aérodynamiques similaires à ceux d'une virole d'un seul tenant.

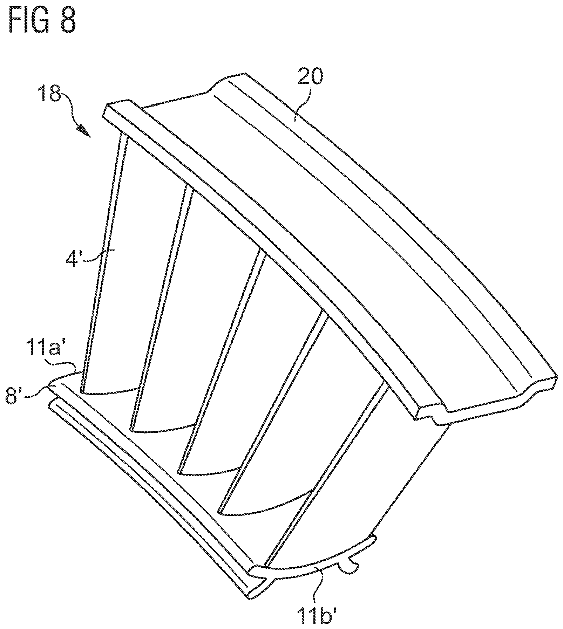

Les aubes peuvent être faites du même matériau que la virole interne, en particulier en matériau composite. Dans ce cas, il est avantageux de réaliser tout un secteur de redresseur d'un seul tenant tel qu'illustré à la figure 8. Le secteur 18 de la figure 8 est constitué de cinq aubes 4' venues de matière avec un segment de virole externe 20 et un segment de virole interne 8'. Similairement aux segments de virole interne illustrés à la figure 2, le segment de virole interne 8' est conçu de sorte à ce que la jonction avec un autre segment voisin soit au niveau du profil de l'aube située précisément à la jonction. En effet, l'extrémité droite du segment 8' s'arrête à l'extrados de la dernière aube du côté droit, et l'extrémité gauche du segment 8' s'arrête au-delà de l'intrados de la dernière aube du côté gauche et comporte un profil correspondant au profil de l'extrados de l'aube correspondante du secteur voisin (non représenté ; préférentiellement, les secteurs sont tous identiques). De cette façon la jonction entre les segments de virole interne est toujours au niveau du profil d'une aube et assure donc, pareillement à la virole décrite aux figures précédentes, un écoulement très peu perturbé par la jonction tout en permettant des mouvements relatifs entre les segments de virole interne inévitables au vu des gradients de température et des différences entre les matériaux utilisés pour le redresseur et le stator.

Les profils au niveau de la jonction tels qu'illustrés aux figures 2, 3, 6 et 7 peuvent être appliqués au secteur de virole tel que décrit ci-avant. Le segment de virole externe comporte des extrémités droites contrairement au segment interne. En effet, dans le cas de la réalisation du redresseur par secteurs entiers en matériau composite tel qu'illustré à la figure 8, les segments de virole externe sont fixés par divers moyens de fixation à un stator habituellement en matériau métallique. Dans le cas de la figure 8, le segment externe comporte des bords amont et aval aptes à être glissés dans des rainures correspondantes du stator. De cette façon les segments externes sont rigidement liés entre eux et sont moins sujets à des problèmes de ressaut au niveau de la jonction que les segments internes. En fonction de la technique de fixation utilisée, il peut cependant s'avérer utile d'appliquer aux segments externes la même mesure qu'aux segments internes.

## Revendications

1. Redresseur de stator à aubes de turbomachine axiale, comprenant des aubes (4) et une virole interne (8) maintenue en place par les aubes et conçue pour épouser un rotor de la turbomachine, la virole étant constituée d'au moins deux segments (8a, 8b) ayant une forme générale d'arc de cercle et destinés à être disposés bout à bout en vue de former la virole, chaque segment (8a, 8b) comprenant sur sa face extérieure une pluralité d'ouvertures (10) réparties selon l'arc de cercle général du segment, recevant, chacune, l'extrémité d'une des aubes (4) du stator ; **caractérisé en ce que** chaque extrémité de segment (8a, 8b) comporte une section (11a, 11b) dont le profil correspond essentiellement à celui de l'extrémité de l'aube correspondante, de sorte à ce que la jonction entre deux segments adjacents (8a, 8b) corresponde au profil de l'aube correspondante ; et la liaison au niveau de la jonction entre les aubes (4) et les segments (8a, 8b) est assurée par un élastomère.

2. Redresseur selon la revendication 1, **caractérisé en ce que** les extrémités des segments (8a, 8b) sont profilées de sorte à contourner les aubes (4) au droit des jonctions entre les segments.

3. Redresseur selon la revendication 2, **caractérisé en ce que** les segments (8a, 8b) comportent un bord amont et un bord aval par rapport à l'écoulement de fluide dans la turbomachine, la partie de la jonction contournant l'aube (4) étant à distance du bord amont et du bord aval.

4. Redresseur selon l'une des revendications 2 et 3, **caractérisé en ce que** la partie de la jonction en aval de l'aube et/ou la partie de la jonction en amont de l'aube comporte(nt) une section (12a, 12b) généralement rectiligne adjacente au contour de l'aube et formant un angle avec le bord de la virole supérieur ou égal à 30°, préférentiellement supérieur ou égal à 60°.

5. Redresseur selon l'une des revendications 2 à 4, **caractérisé en ce que** la partie de la jonction en aval de l'aube et/ou la partie de la jonction en amont de l'aube comporte(nt) des moyens de liaison à contact positif (13a, 13b, 13a', 13b'), préférentiellement sur chaque segment (8a, 8b) de part et d'autre de la jonction, les moyens de liaison assurant une liaison généralement selon une direction tangente au cercle de la virole.

6. Redresseur selon la revendication 5, **caractérisé en ce que** les moyens de liaison à contact positif (13a, 13b, 13a', 13b') font partie des segments (8a, 8b) de part et d'autre de la jonction et sont tels qu'ils coopèrent par emboitement, le mouvement d'emboitement étant préférentiellement généralement dirigé selon un rayon des segments.

7. Redresseur selon l'une des revendications 5 et 6, **caractérisé en ce que** les moyens de liaison (13a, 13b, 13a', 13b') sont venus de matière avec les segments.

8. Redresseur selon l'une des revendications 5 à 7, **caractérisé en ce que** les moyens de liaison (13a, 13b, 13a', 13b') sont prévus au niveau d'une partie de la jonction qui est généralement parallèle aux bords amont et aval des segments.

9. Redresseur selon l'une des revendications 5 à 8, **caractérisé en ce que** les moyens de liaison comprennent au moins un bossage (13b, 13b') sur un segment (8b) et un creux (13a, 13a') sur le segment voisin (8a), le bossage et le creux ayant des formes géométriques correspondantes et sorte à ce que le bossage puisse coopérer avec le creux lors de l'emboitement afin d'assurer la liaison, préférentiellement le creux (13a, 13a') débouche sur une des surfaces extérieure et intérieure du segment.

10. Redresseur selon l'une des revendications 2 à 9, **caractérisé en ce que** la jonction est telle que son profil comporte une partie centrale correspondant à l'aube (4), deux parties intermédiaires droites, de part et d'autre de la partie centrale, généralement parallèles aux bords des segments et comportant les moyens de liaison, et deux parties de retour prolongeant les parties intermédiaires vers le bord correspondant.

11. Redresseur selon l'une des revendications 1 à 10, **caractérisé en ce que** les segments (8a, 8b) sont en matériau composite, préférentiellement en matériau comprenant une résine associée à des fibres de carbone et/ou de verre.

12. Redresseur selon l'une des revendications 1 à 11, **caractérisé en ce que** la section d'un segment (8a, 8b) est en forme générale de U dont la partie ouverte est dirigée vers l'intérieur du cercle de la virole.

13. Redresseur selon l'une des revendications 1 à 12, **caractérisé en ce que** la section des segments comprend une base de délimitation du flux entre les aubes du stator, la base comportant les ouvertures (10) destinées à recevoir les extrémités des aubes (4), chaque ouverture étant prolongée vers l'intérieur par de la matière (17) en saillie de la base, la matière en saillie étant préférentiellement venue de matière avec le segment (8a, 8b).

14. Stator annulaire à aubes de turbomachine axiale, constitué d'au moins deux secteurs (18) destinés à être disposés bout à bout en vue de former le stator, chaque secteur d'un seul tenant en matériau composite comprenant un segment externe (20) et un segment interne (8'), chaque segment ayant une forme générale d'arc de cercle correspondant à l'anneau externe et interne, respectivement, du stator ; une pluralité d'aubes (4') agencées entre le segment externe (20) et le segment interne (8') et réparties le long des segments externe et interne, **caractérisé en ce qu'**une des extrémités (11b') du segment interne (8') soit au droit de la face externe de la dernière aube du secteur de ce côté, et **en ce que** l'autre extrémité (11a') du segment interne (8') comporte une section dont le profil correspond essentiellement au profil extérieur de l'aube proximale du secteur voisin adjacent, de sorte à ce que la jonction entre deux secteur adjacents corresponde à la face extérieure de l'aube correspondante.

## Patentansprüche

1. Gleichrichter eines beschaufelten Stators einer axialen Turbomaschine, umfassend Schaufeln und einen inneren Ring (8), der von den Schaufeln an seinem Platz gehalten wird und dafür ausgelegt ist, mit einem Rotor der Turbomaschine ineinanderzugreifen, wobei der innere Ring aus mindestens zwei Segmenten (8a, 8b) besteht, die die allgemeine Form eines Kreisbogens aufweisen und dazu bestimmt sind, Ende an Ende angeordnet zu sein, um den Ring zu bilden, wobei jedes Segment (8a, 8b) an der Außenseite eine Vielzahl von Öffnungen (10) aufweist, die in regelmäßigen Abständen entlang dem allgemeinen Kreisbogen des Segments angeordnet sind, wovon in jede das Ende einer der Schaufeln (4) des Stators aufgenommen ist ; **dadurch gekennzeichnet, dass** jedes Ende eines Segments (8a, 8b) einen Abschnitt (110, 11b) aufweist, wovon das Profil im Wesentlichen dem des Endes der entsprechenden Schaufel entspricht, sodass die Verbindung zwischen zwei benachbarten Segmenten (8a, 8b) dem Profil der entsprechenden Schaufel entspricht ; und wobei die Verbindung zwischen den Schaufeln (4) und den Segmenten (8a, 8b) durch ein Elastomer bereitgestellt wird.

2. Gleichrichter nach Anspruch 1, **dadurch gekennzeichnet, dass** die Enden der Segmente (8a, 8b) so mit einem Profil versehen sind, dass sie sich den Konturen der Schaufeln (4) in Höhe der Verbindungen zwischen den Segmenten anpassen.

3. Gleichrichter nach Anspruch 2, **dadurch gekennzeichnet, dass** die Segmente (8a, 8b) eine stromaufwärtige Kante und eine stromabwärtige Kante in Bezug auf den Fluidstrom in der Turbomaschine umfassen, wobei der Teil der Verbindung, der die Schaufel (4) umgibt, sich in einem Abstand von der stromaufwärtigen Kante und der stromabwärtigen Kante befindet.

4. Gleichrichter nach einem der Ansprüche 2 und 3, **dadurch gekennzeichnet, dass** der Teil der Verbindung stromabwärts von der Schaufel und/oder der Teil der Verbindung stromaufwärts von der Schaufel einen Abschnitt (12a, 12b) umfasst bzw. umfassen, der generell geradlinig und benachbart zur Kontur der Schaufel ist, und einen Winkel mit der Kante des Rings bildet, der größer oder gleich 30°, bevorzugt größer oder gleich 60° ist.

5. Gleichrichter nach einem der Ansprüche 2 bis 4, **dadurch gekennzeichnet, dass** der Teil der Verbindung stromabwärts von der Schaufel und/oder der Teil der Verbindung stromabwärts von der Schaufel Verbindungsmittel mit positivem Kontakt (13a, 13b, 13a', 13b') umfasst bzw. umfassen, bevorzugt an jedem Segment (8a, 8b) zu beiden Seiten der Verbindung, wobei die Verbindungsmittel eine Kopplung generell in einer Richtung tangential zum Kreis des Rings bereitstellen.

6. Gleichrichter nach Anspruch 5, **dadurch gekennzeichnet, dass** die Verbindungsmittel mit positivem Kontakt (13a, 13b, 13a', 13b') Teil der Segmente (8a, 8b) an beiden Seiten der Verbindung sind und so sind, dass sie zusammenwirken, indem sie zusammenpassen, wobei die Passbewegungen bevorzugt in der generellen Richtung des Radius der Segmente sind.

7. Gleichrichter nach einem der Ansprüche 5 und 6, **dadurch gekennzeichnet, dass** die Verbindungsmittel (13a, 13b, 13a', 13b') aus demselben Material bestehen wie die Segmente.

8. Gleichrichter nach einem der Ansprüche 5 bis 7, **dadurch gekennzeichnet, dass** die Verbindungsmittel (13a, 13b, 13a', 13b') an einem Teil der Verbindung vorgesehen sind, der generell parallel zu der stromaufwärtigen und der stromabwärtigen Kante der Segmente ist.

9. Gleichrichter nach einem der Ansprüche 5 bis 8, **dadurch gekennzeichnet, dass** die Verbindungsmittel mindestens einen Vorsprung (13b, 13b') an einem Segment (8b) und eine Ausnehmung (13a, 13a') an dem benachbarten Segment (8a) umfassen, wobei der Vorsprung und die Ausnehmung entsprechende geometrische Formen aufweisen, sodass der Vorsprung mit der Ausnehmung zusammenpasst, um die Kopplung bereitzustellen ; bevorzugt öffnet sich die Ausnehmung (13a, 13a') zu einer der Außen- und der Innenfläche des Segments.

10. Gleichrichter nach einem der Ansprüche 2 bis 9, **dadurch gekennzeichnet, dass** die Verbindung derart ist, dass ihr Profil einen zentralen Abschnitt, der der Schaufel (4) entspricht, zwei gerade Zwischenabschnitte, die sich an beiden Seiten des zentralen Abschnitts generell parallel zu den Kanten des Segments befinden und Verbindungsmittel aufweisen, und zwei hintere Abschnitte, die die Zwischenabschnitte zu der entsprechenden Kante hin verlängern, besitzt.

11. Gleichrichter nach einem der Ansprüche 1 bis 10, **dadurch gekennzeichnet, dass** die Segmente (8a, 8b) aus einem Verbundwerkstoff bestehen, bevorzugt aus einem Material, das ein Harz, kombiniert mit Fasern aus Kohlenstoff und/oder Eisen, enthält.

12. Gleichrichter nach einem der Ansprüche 1 bis 11, **dadurch gekennzeichnet, dass** der Querschnitt eines Segments (8a, 8b) eine generelle U-Form aufweist, wovon der offene Teil zur Innenseite des Kreises des Rings gerichtet ist.

13. Gleichrichter nach einem der Ansprüche 1 bis 12, **dadurch gekennzeichnet, dass** der Querschnitt der Segmente eine Basis zur Begrenzung des Stroms zwischen den Schaufeln des Stators umfasst, wobei die Basis Öffnungen (10) besitzt, die zur Aufnahme der Enden der Schaufeln (4) bestimmt sind, wobei jede Öffnung zum Inneren des von der Basis vorragenden Materials (17) hin verlängert ist, wobei das Hüllmaterial bevorzugt dasselbe ist wie das des Segments (8a, 8b).

14. Mit Schaufeln versehener ringförmiger Stator einer axialen Turbomaschine, bestehend aus mindestens zwei Sektoren (18), die dazu bestimmt sind, Ende an Ende angeordnet zu werden, um den Stator zu bilden, wobei jeder Sektor einstückig aus Verbundwerkstoff hergestellt ist, umfassend ein äußeres Segment (20) und ein inneres Segment (8'), wobei jedes Segment die generelle Form eines Kreisbogens aufweist, der dem äußeren beziehungsweise dem inneren Ring des Stators entspricht ; einer Vielzahl von Schaufeln (4'), die zwischen dem äußeren Segment (20) und dem inneren Segment (8') und in regelmäßigen Abständen entlang der Länge des äußeren und des inneren Segments angeordnet sind, **dadurch gekennzeichnet, dass** eines der Enden (11b') des inneren Segments (8') sich rechts von der Außenseite der letzten Schaufel des Sektors an der Seite befindet, und dass das andere Ende (11a') des inneren Segments (8') einen Abschnitt besitzt, wovon das Profil im Wesentlichen dem äußeren Profil der proximalen Schaufel des anliegenden benachbarten Sektors entspricht, sodass die Verbindung zwischen zwei benachbarten Sektoren der Außenseite der entsprechenden Schaufel entspricht.

## Claims

1. Rectifier of a bladed stator of an axial turbomachine, comprising blades and an inner ferrule (8) held in place by the blades and configured for mating with a rotor of the turbomachine, the inner ferrule consisting of at least two segments (8a, 8b) having the general form of an arc of a circle and intended to be arranged end to end so as to form the ferrule, each segment (8a, 8b) including on the outside a plurality of openings (10) arranged at regular distances along the general arc of the circle of the segment, into each of which the end of one of the blades (4) of the stator is fitted; **characterized in that** each end of a segment (8a, 8b) possesses a section (11a, 11b) of which the profile essentially corresponds with that of the end of the corresponding blade, so that the joint between two adjacent segments (8a, 8b) corresponds with the profile of the corresponding blade; and the joint between the blades (4) and the segments (8a, 8b) is provided by an elastomer.

2. Rectifier according to claim 1, **characterized in that** the ends of the segments (8a, 8b) are profiled to match the contours of the blades (4) at the level of the joints between the segments.

3. Rectifier according to claim 2, **characterized in that** the segments (8a, 8b) comprise an upstream edge and a downstream edge relative to the fluid flow in the turbomachine, the part of the joint that envelops the blade (4) being at a distance from the upstream edge and the downstream edge.

4. Rectifier according to one of claims 2 and 3, **characterized in that** the part of the joint downstream of the blade and/or the part of the joint upstream of the blade comprise(s) a section (12a, 12b), generally a straight line adjacent to the contour of the blade and forming an angle with the edge of the ferrule greater than or equal to 30°, preferably greater than or equal to 60°.

5. Rectifier according to one of claims 2 to 4, **characterized in that** the part of the joint downstream of the blade and/or the part of the joint upstream of the blade comprise(s) connecting means with a positive contact (13a, 13b, 13a', 13b'), preferably, on each segment (8a, 8b) on both sides of the joint, the connecting means providing a coupling generally in a direction that it tangential to the circle of the ferrule.

6. Rectifier according to claim 5, **characterized in that** the connecting means with a positive contact (13a, 13b, 13a', 13b') are part of the segments (8a, 8b) on both sides of the joint and are such that they work together by fitting together, the fitting movements being preferably in the general direction of the radius of the segments.

7. Rectifier according to one of claims 5 and 6, **characterized in that** the connecting means (13a, 13b, 13a', 13b') are of the same material as the segments.

8. Rectifier according to one of claims 5 to 7, **characterized in that** the connecting means (13a, 13b, 13a', 13b') are foreseen at one portion of the joint which is generally parallel to the upstream and downstream edges of the segments.

9. Rectifier according to one of claims 5 to 8, **characterized in that** the connecting means comprise at least one projection (13b, 13b') on a segment (8b) and a recess (13a, 13a') on the neighboring segment (8a), the projection and the recess having corresponding geometric shapes such that the projection fits together with the recess to provide the coupling; preferably, the recess (13a, 13a') opens up onto one of the outer and inner surfaces of the segment.

10. Rectifier according one of claims 2 to 9, **characterized in that** the joint is such that its profile possesses a central portion corresponding with the blade (4), two intermediate straight portions, on both sides of the central portion generally parallel to the edges of the segments and possessing connecting means, and to back portions that extend the intermediate portions toward the corresponding edge.

11. Rectifier according to one of claims 1 to 10, **characterized in that** the segments (8a, 8b) are of a composite material, preferably, of a material containing a resin combined with fibers of carbon and/or iron.

12. Rectifier according one of claims 1 to 11, **characterized in that** the section of a segment (8a, 8b) has the general shape of a U of which the open portion is directed toward the inside of the circle of the ferrule.

13. Rectifier according to one of claims 1 to 12, **characterized in that** the section of the segments contains a base to delimit the flow between the blades of the stator, the base possessing openings (10) into which the ends of the blades (4) are intended to fit, each opening being expended toward the inside of the material (17) projecting from the base, the covering material preferably being the same as that of the segment (8a, 8b).

14. Annular stator with blades of an axial turbomachine, consisting of at least two sectors (18) intended to be arranged end to end so as to form the stator, each sector unitary made of composite material comprising an outer segment (20) and an inner segment (8'), each segment having the general shape of the arc of a circle corresponding with the outer and inner ring, respectively, of the stator; a plurality of blades (4') arranged between the outer segment (20) and the inner segment (8') and in regular distances along the length of the outer and inner segments, **characterized in that** one of the ends (11b') of the inner segment (8') is to the right of the outside of the last blade of the sector on that side, and that the other end (11a') of the inner segment (8') possesses a section of which the profile essentially corresponds with the outer profile of the proximal blade of the adjacent neighboring sector, such that the joint between two adjacent sectors corresponds with the outside of the corresponding blade.
